# EUROPÄISCHE PATENTSCHRIFT

(11) **EP 0 964 549 B1**
(45) Veröffentlichungstag und Bekanntmachung des Hinweises auf die Patenterteilung: **19.04.2006**
(21) Anmeldenummer: 99111243.4
(22) Anmeldetag: 09.06.1999
(51) Int. Cl.: H04L 12/40, H04L 12/26

(54) **ÜBerwachungsschaltung für ein Datenübertragungsnetz**
Monitoring circuit for a data transmission network
Circuit de surveillance d'un réseau de transmission

(30) Priorität: 12.06.1998 DE 19826387
(43) Veröffentlichungstag der Anmeldung: 15.12.1999
(73) Patentinhaber: STMicroelectronics GmbH, 85630 Grasbrunn (DE)
(72) Erfinder: Heinrich, Peter, 83024 Rosenheim (DE)
(74) Vertreter: Hirsch, Peter

(56) Entgegenhaltungen:
- EP-A- 0 529 602
- EP-A- 0 698 980
- DE-A- 19 523 031
- US-A- 5 216 674

## Beschreibung

Die Erfindung betrifft eine Überwachungsschaltung für ein Datenübertragungsnetz, insbesondere CAN-Netz, mit einer Mehrzahl von sende- und empfangsfähigen Netzknoten und mit einem die Netzknoten verbindenden, der redundanten Doppelübertragung von digitalen Nachrichten dienenden Doppelleitungsbus mit einer ersten Leitung und einer zweiten Leitung, über welche Nachrichtenimpulse, die in Form von zeitlich voneinander beabstandeten Impulsfolgen übertragen werden, zeitlagenmäßig gleichlaufend, jedoch amplitudenmäßig vorzugsweise gegenläufig übertragen werden. Dabei wird ein erster Logikwert der binären Daten durch einen hohen Potentialwert auf der ersten Leitung und einen niedrigen Potentialwert auf der zweiten Leitung und ein zweiter Logikwert der binären Daten durch einen niedrigen Potentialwert auf der ersten Leitung und einen hohen Potentialwert auf der zweiten Leitung dargestellt.

Der Begriff CAN steht für Controller-Area Network. Nähere Angaben hierzu finden sich in dem Buch "Controller-Area Network: CAN" von Konrad Etschberger, Carl Hanser Verlag 1994, ISBN-Nr. 3-446-17596-2. Interessant im vorliegenden Zusammenhang sind insbesondere die Abschnitte-Protokolleigenschaften auf den Seiten 25 und 26 und Daten/Rahmen-Format auf den Seiten 37 bis 43.

Einsatz finden derartige CAN-Systeme beispielsweise im Kraftfahrzeugbereich.

Für das CAN-System gibt es eine gemeinsame Versorgungsspannungsquelle, z.B. in Form einer Kraftfahrzeugbatterie, die beispielsweise eine Batteriespannung von 12 V liefert. Außerdem besitzt jeder Netzknoten eine netzknoteneigene, individuelle Betriebsspannungsquelle, die aus der Versorgungsspannung eine den jeweiligen Netzknoten versorgende geregelte Betriebsspannung erzeugt, beispielsweise in Höhe von 5 V. Jede Betriebsspannungsquelle liefert an einem ersten Anschluß ein Betriebspotential und an einem zweiten Anschluß ein Bezugspotential, beispielsweise Massepotential oder 0 V.

Mindestens ein Teil der Netzknoten kann sowohl als Sender als auch als Empfänger fungieren. Zu diesem Zweck weisen solche Netzknoten einen Sendeteil und einen Empfangsteil auf.

Der Sendeteil eines solchen Netzknotens weist zwei Widerstände und zwei steuerbare elektronische Schalter auf, die mit den beiden Leitungen des Doppelleitungsbus verbunden sind. Eine dieser Leitungen ist über einen ersten dieser Widerstände mit dem Betriebspotential (5 V) und über einen ersten dieser Schalter mit dem Bezugspotential (0 V) verbunden. Die andere Leitung ist über den zweiten Widerstand mit dem Bezugspotential (0 V) und über den zweiten Schalter mit dem Betriebspotential (5 V) verbunden. Zum Senden von digitalen Nachrichten werden die beiden Schalter synchron entweder in einen leitenden Zustand oder in einen nichtleitenden Zustand gesteuert. Bei nichtleitend gesteuerten Schaltern liegt an der einen Leitung das Betriebspotential und an der anderen Leitung das Bezugspotential. Diesem Schalterzustand wird beispielsweise der Logikwert "1" zugeordnet. Bei leitend gesteuerten Schaltern liegt an der einen Leitung das Bezugspotential und an der anderen Leitung das Betriebspotential. Diesem Schalterzustand wird dann der Logikwert "0" zugeordnet.

Da die Sendeteile aller sendefähigen Netzknoten bezüglich der beiden Leitungen parallel geschaltet sind, kann das dem Logikwert "0" zugeordnete Potentialverhältnis auf den beiden Leitungen durch Schließen der beiden Schalter eines jeden der sendefähigen Netzknoten erzeugt werden. Andererseits kann der nichtleitende Zustand der beiden Schalter eines jeden Netzknotens durch den leitenden Zustand der beiden Schalter eines anderen Netzknotens überspielt werden. Daher nennt man den Logikwert, der einem geschlossenen Schalterpaar zugeordnet ist (Logikwert "0"), dominant und den Logikwert, der einem nichtleitenden Schalterpaar zugeordnet ist (Logikwert "1"), rezessiv.

Der Empfangsteil eines jeden empfangsfähigen Netzknotens weist einen Komparator auf, der die jeweiligen Potentiale auf den beiden Leitungen miteinander vergleicht. Beim Empfang eines rezessiven Bits (Logikwert "1") entsteht am Ausgang des Komparators beispielsweise ein positives Potential, dem der Logikwert "1" zugeordnet wird. Beim Empfang eines dominanten Bits (Logikwert "0") steht am Ausgang des Komparators ein dem Bezugspotential entsprechendes Potential, dem dann der Logikwert "0" zugeordnet wird. Der Komparator bildet somit einen Decoder für die dem jeweils gesendeten Bit entsprechenden Potentialverhältnisse auf den beiden Leitungen.

Die beiden Leitungen werden aus Redundanzgründen neben der Systemmasse verwendet. Die dem Potentialwert des jeweils gesendeten Bits entsprechende Nachrichteninformation wird auf diese Weise sowohl über die eine Leitung als auch über die andere Leitung übertragen. Fällt eine der beiden Leitungen aus, kann der weitere Sendebetrieb auf die nicht ausgefallene Leitung beschränkt werden. Zur Erfassung von Leitungsausfällen können zwei weitere Komparatoren vorgesehen sein, von denen einer das Potential der einen Leitung und der andere das Potential der anderen Leitung mit einem zwischen dem Betriebspotential und dem Bezugspotential liegenden Mittenpotential vergleicht.

Es können verschiedene Leitungsausfälle oder Leitungsfehler vorkommen, beispielsweise in Form von Kurzschlüssen zwischen den beiden Leitungen, Kurzschlüssen zur Systemmasse, Kurzschlüssen zur Betriebspotentialquelle, Kurzschlüssen zur Versorgungsspannungsquelle oder in Form von offenen Leitungen. Es gibt Leitungsfehler, die ein sicheres Decodieren der gesendeten Nachrichten nicht behindern. Es gibt andere Leitungsfehler, gegen die bestimmte Maßnahmen erforderlich sind, um weiterhin eine korrekte Dekodierung zu ermöglichen. Näheres hierzu findet man in der DE 195 23 031 A1. Diese Druckschrift beschreibt eine Überwachungsschaltung nach dem Oberbegriff des Patentanspruchs 1.

Bei einem CAN-Netz werden die Nachrichten in Form von zeitlich voneinander beabstandeten Impulsfolgen oder Rahmen übertragen. Das übliche CAN-Protokoll sieht vor, daß zwischen den einzelnen Rahmen ein zeitlicher Mindestabstand vorhanden ist, daß innerhalb eines Rahmens nicht mehr als eine vorbestimmte Anzahl rezessiver oder dominanter Bits aufeinanderfolgen darf und daß alle empfangsfähigen Netzknoten den Empfang der jeweiligen Impulsfolge durch das Senden eines Bestätigungsimpulses während einer vorbestimmten, für alle Netzknoten gleichen Zeitlage (im folgenden Bestätigungszeitlage genannt) am Ende der jeweiligen Impulsfolge bestätigen. Das Senden des Bestätigungsimpulses erfolgt, indem in jedem bestätigenden Netzknoten der zweite Schalter leitend gesteuert wird.

Weist diejenige Leitung, welche über ihren Widerstand mit dem Bezugspotential verbunden ist, einen Kurzschluß zur Systemmasse auf, sind während der Bestätigungszeitlage die netzknoteneigenen Betriebspotentialquellen (5 V) aller bestätigenden Netzknoten über den je zugehörenden zweiten Schalter und über diesen Kurzschluß mit der Systemmasse kurzgeschlossen. Als Folge davon fließt während einer solchen Bestätigungszeitlage über die kurzgeschlossene Leitung ein hoher Stromimpuls. Weist das CAN-Netz beispielsweise 40 empfangsfähige Netzknoten auf und liefert die netzknoteneigene Betriebsspannungssquelle eines jeden dieser 40 Netzknoten in die kurzgeschlossene Leitung einen Strom von 200 mA, kommt es auf dieser kurzgeschlossenen Leitung während der Bestätigungszeitlage zu einem Gesamtstromimpuls in Höhe von 8 A.

Derartige hohe Stromimpulse belasten nicht nur die Versorgungsspannungsquelle sondern können auch Störungen im Datenübertragungsnetz verursachen. Während des hohen Kurzschlußstroms wird in der Leitungsinduktivität der kurzgeschlossenen Leitung induktive Energie gespeichert, die sich nach dem Öffnen der zweiten Schalter der bestätigenden Netzknoten in Form eines Spannungsimpulses auf der kurzgeschlossenen Leitung entlädt. Dieser Spannungsimpuls kann durch Nebensprechen auf die nicht kurzgeschlossene andere Leitung übergreifen und dort einen Störimpuls verursachen. Dieser Störimpuls wird fälschlicherweise als ein Nachrichtenbit interpretiert und der letzte gesendete Rahmen wird als nicht korrekt übertragen bewertet, was zur wiederholten Aussendung dieses Rahmens führt. Wenn der Leitungskurzschluß während der Bestätigungszeitlage für diesen wiederholt gesendeten Rahmen noch besteht, kommt es erneut zu einem hohen Stromimpuls auf der Kurzschlußleitung, in dessen Folge zu einem erneuten Störbit auf der nicht kurzgeschlossenen Leitung und zu einem erneut wiederholten Senden des bereits wiederholten Rahmens. Dies geht dann immer so weiter und das Datenübertragungsnetz bleibt in dieser Schleife gefangen.

Aufgabe der Erfindung ist es, hier Abhilfe zu schaffen und derartige Störungen zu vermeiden.

Dies gelingt mit einer Überwachungsschaltung der in Anspruch 1 angegebenen Art, die gemäß den Unteransprüchen weitergebildet werden kann.

Mit der Erfindung wird verfügbar gemacht eine Überwachungsschaltung für ein Datenübertragungsnetz mit einer Mehrzahl von sende- und empfangsfähigen Netzknoten und mit einem die Netzknoten verbindenden, der redundanten Doppelübertragung von digitalen Nachrichten dienenden Doppelleitungsbus mit einer ersten Leitung und einer zweiten Leitung, über welche in Form von zeitlich voneinander beabstandeten Impulsfolgen übertragene Nachrichtenimpulse zeitlagenmäßig gleichlaufend übertragen werden. Dabei bestätigt mindestens ein Teil der Netzkrioten den Empfang der jeweiligen Impulsfolge durch das Senden eines Bestätigungsimpulses während einer vorbestimmten, für alle Netzknoten gleichen Zeitlage. In mindestens einem Teil der Netzlmoten ist die erste Leitung über einen ersten Widerstand mit einer netzknoteneigenen Betriebspotentialquelle und über einen ersten steuerbaren Schalter mit einer Bezugspotentialquelle und ist die zweite Leitung über einen zweiten Widerstand mit der Bezugspotentialquelle und über einen steuerbaren zweiten Schalter mit der Betriebspotentialquelle verbunden. Die beiden Schalter werden zum Senden eines Nachrichtenimpulses eines ersten Logikwertes gleichzeitig nichtleitend und zum Senden eines Nachrichtenimpulses eines zweiten Logikwertes gleichzeitig leitend gesteuert. Es ist eine Potentialwechseldetektoreinrichtung vorgesehen ist, mittels welcher die beiden Leitungen je auf das Vorliegen von Potentialwechselaktivitäten überwachbar sind und mittels welcher ein Zustand detektierbar ist, in welchem während einer Impulsfolge Potentialwechselaktivitäten nur auf der ersten Leitung, nicht jedoch auf der zweiten Leitung auftreten. Ferner ist eine erste Zeitmeßeinrichtung vorgesehen, mittels welcher eine zeitliche Messung der Dauer eines solchen Zustandes durchführbar ist und mittels welcher beim Überschreiten einer vorbestimmten Zeitdauer eines solchen Zustands ein Fehlersignal erzeugbar ist, aufgrund dessen die zweiten Schalter mindestens eines Teils der Netzknoten zwangsweise nichtleitend steuerbar sind.

Bei der erfindungsgemäßen Überwachungsschaltung werden die beiden Leitungen je getrennt auf das Vorliegen von Potentialwechselaktivitäten überwacht. Wird eine unsymmetrische Potentialwechselaktivität festgestellt, bei welcher Potentialwechselaktivitäten nur auf der ersten Leitung stattfinden, nicht jedoch auf der zweiten Leitung, wird davon ausgegangen, daß ein Leitungsfehler in Form eines Kurzschlusses der zweiten Leitung nach Systemmasse hin vorliegen kann. Bei der Feststellung einer derartigen unsymmetrischen Potentialwechselaktivität wird aber nicht sofort ein Fehlersignal erzeugt sondern erst, wenn eine derartige unsymmetrische Potentialwechselaktivität für eine vorbestimmte Zeitdauer aufgetreten ist. Zu diesem Zweck ist die erste Zeitmeßeinrichtung vorgesehen, die an ihrem Ausgang ein Fehlersignal erst dann erzeugt, wenn diese Zeitdauer überschritten ist. In Abhängigkeit von diesem Fehlersignal werden dann die zweiten Schalter sämtlicher empfangsfähigen Netzknoten oder mindestens eines Teils der empfangsfähigen Netzknoten zwangsweise nichtleitend gesteuert. Dadurch wird in allen solchen Netzknoten verhindert, daß deren jeweilige Betriebsspannungsquelle einen Kurzschlußstrom über die kurzgeschlossene Leitung in die Systemmasse liefert.

Eine Unsymmetrie hinsichtlich der Potentialwechselaktivitäten auf beiden Leitungen kann auch durch vereinzelte Störimpulse auf nur einer der beiden Leitungen verursacht werden. Mit der ersten Zeitmeßeinrichtung wird verhindert, daß solche Störimpulse, wenn sie nur auf der ersten Leitung auftreten, das Fehlersignal und damit ein zwangsweises Schalten der zweiten Schalter in den nichtleitenden Schaltzustand auslösen. Die Meßdauer der ersten Zeitmeßeinrichtung wird so gewählt, daß aufeinanderfolgende Störimpulse bis zu einer vorbestimmten Anzahl, beispielsweise bis zur Anzahl drei, das Fehlersignal noch nicht auslösen können. Es findet somit eine Unwirksamkeits-Maskierung hinsichtlich solcher Störimpulse statt.

Bei einer bevorzugten Ausführungsform ist die erste Zeitmeßeinrichtung mit einem Aufwärts/Abwärts-Zähler aufgebaut, der Potentialwechsel der ersten Leitung aufwärts und Potentialwechsel der zweiten Leitung abwärts zählt und beim Erreichen eines vorbestimmten Zählwertes, der beispielsweise größer als drei ist, ein Fehlersignal abgibt. Solange beide Leitungen gleich viele Potentialwechsel aufweisen, was bei einem fehlerfreien Bus der Fall ist, finden aufeinanderfolgend abwechselnd Aufwärts- und Abwärtszählvorgänge statt, so daß der vorbestimmte Zählwert von beispielsweise drei nicht erreicht wird. Tritt ein Kurzschluß der zweiten Leitung gegen Systemmasse hin auf, von wo ab Potentialwechsel nur noch von der ersten Leitung gemeldet werden, führt der Aufwärts/Abwärts-Zähler nur noch Aufwärts-Zählvorgänge durch und erreicht nach drei Potentialwechseln auf der ersten Leitung den vorbestimmten Zählwert, der zur Abgabe eines Fehlersignals am Ausgang des Aufwärts/Abwärts-Zählers führt.

Die Potentialwechseldetektoreinrichtung kann zwei Komparatoreinrichtungen aufweisen, mittels welchen die Potentiale der beiden Leitungen je mit einem zwischen dem Betriebspotential und dem Bezugspotential liegenden Mittenpotential verglichen werden. Dabei ist die die erste Leitung überwachende Komparatoreinrichtung mit dem Aufwärts-Zähleingang und die die zweite Leitung überwachende Komparatoreinrichtung mit dem Abwärts-Zähleingang des AufwärtsAbwärts-Zählers gekoppelt.

Vorzugsweise befinden sich zwischen den beiden Komparatoreinrichtungen und den beiden Zähleingängen des AufwärtsAbwärts-Zählers je ein Differenzierglied, mittels welchem Potentialwechsel in zählbare Impulse umgeformt werden. Die Differenzierglieder können gleichrichtend ausgebildet sein, damit jeder Potentialwechsel zu einem zählbaren Impuls werden kann.

Hat der Aufwärts/Abwärts-Zähler den vorbestimmten Zählwert erreicht, bei welchem er ein Fehlersignal abgibt, bleibt dieses Fehlersignal stehen, und zwar unabhängig davon, ob auch der zugrundeliegende Leitungsfehler noch besteht oder nicht. Dies kann beabsichtigt sein, beispielsweise um zu einem Inspektions- oder Diagnosezeitpunkt feststellen zu können, daß ein solcher Fehler aufgetreten war, auch wenn er zum Zeitpunkt der Inspektion oder Diagnose nicht mehr vorliegt.

Bevorzugt wird eine Ausführungsform, bei welcher immer wieder überprüft wird, ob der Leitungsfehler noch vorliegt oder nicht. Beispielsweise kann ein Kurzschluß einer Leitung zur Systemmasse hin jeweils nur kurzfristig auftreten, z.B. wenn eine hinsichtlich ihrer Isolierung durchgescheuerte Leitung nur bei extremen Erschütterungen eines Kraftfahrzeugs kurzfristig die Systemmasse berührt, die meiste Zeit aber von der Systemmasse entfernt ist.

Zu diesem Zweck sieht eine bevorzugte Ausführungsform der Erfindung eine Schaltungseinrichtung vor, mittels welcher beim Beginn einer jeden neuen Impulsfolge oder eines neuen (Nachrichten-) Rahmens überprüft wird, ob der während des vorausgehenden Rahmens festgestellte Leitungsfehler noch vorliegt oder nicht. Hierfür kann eine rücksetzbare zweite Zeitmeßeinrichtung vorgesehen werden, die eingangsseitig mit dem Fehlersignal beaufschlagbar ist und ausgangssseitig ein die zweiten Schalter zwangsweise nichtleitend steuerndes Schaltersteuersignal abgeben kann und die eine vorbestimmte Zeitdauer nach dem Ende eines Rahmens rückgesetzt wird und vom jeweiligen Rücksetzzeitpunkt ab ein etwa vorhandenes Fehlersignal für eine vorbestimmte Meßzeitdauer maskiert. D.h., daß sich ein zum Zeitpunkt des Rücksetzens noch vorhandenes Fehlersignal nur dann zur Abgabe des genannten Schaltersteuersignals auswirken kann, wenn das Fehlersignal auch nach Ablauf der Meßzeitdauer der zweiten Zeitmeßeinrichtung noch anliegt. Während dieser Meßzeitdauer wird dem Aufwärts/Abwärtszähler die Gelegenheit gegeben, unter den das Fehlersignal auslösenden Zählwert herabzuzählen, wenn der Leitungsfehler beim Beginn des nächsten Rahmens nicht mehr vorliegt.

Die zweite Zeitmeßeinrichtung kann durch einen Zähler gebildet sein, der einen mit einer Zähltaktquelle verbundenen Takteingang und einen der Beaufschlagung mit dem Fehlersignal dienenden Zählfreigabeeingang aufweist. Nur wenn dieser Zähler nach dem Rücksetzen auf einen vorbestimmten Zählwert hochzählt, weil seinem Zählfreigabeeingang das Fehlersignal entsprechend lange zugeführt worden ist, wird an seinem Ausgang das Schaltersteuersignal abgegeben.

Damit dann, wenn beim Beginn eines neuen Rahmens der betrachtete Leitungsfehler nicht mehr vorliegt, der Aufwärts/Abwärts-Zähler innerhalb der Maskierungszeit der zweiten Zeitmeßeinrichtung rasch und sicher von dem Zählwert herabzählen kann, auf Grund dessen er während des vorausgehenden Rahmens das Fehlersignal abgegeben hat, sieht eine bevorzugte Ausführungsform der erfindungsgemäßen Überwachungsschaltung eine Vorrangschaltung zwischen der Potentialwechseldetektoreinrichtung und den Zähleingängen des Aufwärts/Abwärts-Zählers vor. Werden beiden Zähleingängen Potentialwechselimpulse zugeführt, weil wieder beide Leitungen Potentialwechselaktivitäten aufweisen, wird mittels dieser Vorrangschaltung erreicht, daß das Abwärtszählen entsprechend der Potentialwechselaktivität der zuvor fehlerhaften Leitung Vorrang hat vor dem Aufwärtszählen entsprechend der Potentialwechselaktivität der anderen Leitung.

Zur Erfassung des jeweiligen Rahmenendes kann eine dritte Zeitmeßeinrichtung vorgesehen sein, der Änderungen der Potentialdifferenz zwischen den beiden Leitungen signalisiert werden und die bei jeder signalisierten Potentialdifferenzänderung in einen Anfangszustand rücksetzbar ist. Wird eine vorbestimmte Zeitdauer ab dem letzten Rücksetzvorgang überschritten, ohne daß eine neue Rücksetzung stattfindet, wird davon ausgegangen, daß das Ende des jeweiligen Rahmens erreicht worden ist, und gibt die dritte Zeitmeßeinrichtung ein Rücksetzsignal ab, mittels welchem die zweite Zeitmeßeinrichtung rückgesetzt wird. Auf diese Weise wird die zweite Zeitmeßeinrichtung vor dem Beginn eines jeden neuen Rahmens in ihren maskierenden Zeitmeßzustand versetzt, innerhalb welchem das Fehlersignal von der ersten Zeitmeßeinrichtung nicht in ein Schaltersteuersignal für das zwangsweise nichtleitend Schalten der zweiten Schalter der empfangsfähigen Netzknoten umgesetzt wird.

Die dritte Zeitmeßeinrichtung kann mit einem dritten Zähler aufgebaut sein, dem an einem Zähltakteingang Zähltakte zugeführt werden und dem an einem Rücksetzeingang als Rücksetzsignal das Signal für Potentialdifferenzänderungen auf den beiden Leitungen zugeführt wird. Vorzugsweise ist auch dem Rücksetzeingang der dritten Zeitmeßeinrichtung ein Differenzierglied vorgeschaltet, das vorzugsweise gleichrichtend wirkt, um jede signalisierte Potentialdifferenzänderung in einen Impuls umzusetzen.

Die Erfindung sowie weitere Aufgabenaspekte und Vorteile der Erfindung werden nun anhand von Ausführungsformen näher erläutert. In den beiliegenden Zeichnungen zeigen:
- Fig. 1: ein Blockschaltbild eines Netzknotens eines CAN-Systems mit Überwachungsschaltung; und
- Fig. 2: eine Ausführungsform eines Differenziergliedes, wie es in Fig. 1 vorhanden ist.

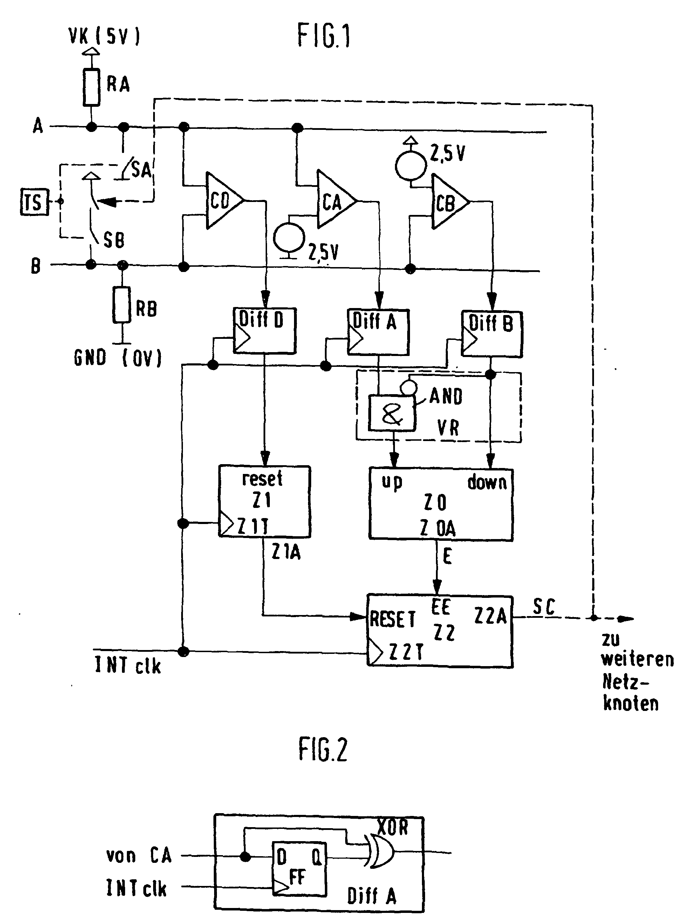

Die in Fig. 1 gezeigte Ausführungsform umfaßt einen Doppelleitungsbus mit zwei Leitungen A und B eines CAN-Systems. Dieses System umfaßt eine Mehrzahl, beispielsweise ca. 40, Netzknoten. In Fig. 1 sind Schaltungskomponenten nur eines einzigen Netzknotens dargestellt. Die weiteren Netzknoten sind mindestens zum Teil identisch aufgebaut.

Die erste Leitung A ist über einen ersten Widerstand RA mit einer netzknoteneigenen Betriebspotentialquelle VK (beispielsweise 5 V) verbunden, während die zweite Leitung über einen zweiten Widerstand RB mit einer Bezugspotentialquelle GND (beispielsweise 0 V) verbunden ist. Außerdem ist die erste Leitung A über einen ersten Schalter SA mit der Bezugspotentialquelle GND verbunden und ist die zweite Leitung B über einen zweiten Schalter SB mit der Bezugspotentialquelle VK verbunden. Die beiden Schalter werden mittels einer Sendesignalquelle TS beide gleichzeitig entweder in einen leitenden Zustand oder einen nichtleitenden Zustand gesteuert. Im nichtleitenden Zustand der beiden Schalter SA und SB liegt auf Leitung A das Betriebspotential VK, beispielsweise 5 V, und an der Leitung B das Bezugspotential, beispielsweise 0 V. Diesem Schalter- und Potentialzustand sind der Begriff "rezessiv" und der Logikwert "1" zugeordnet. Bei leitend gesteuerten Schaltern SA und SB liegt die erste Leitung A auf dem Bezugspotential (0 V) und die zweite Leitung B auf dem Betriebspotential (5 V). Diesem Schalter- und Potentialzustand sind der Begriff "dominant" und der Logikwert "0" zugeordnet. Bei einem Logikwertwechsel des über den Doppelleitungsbus übertragenen binären Nachrichtensignals findet somit auf den beiden Leitungen je ein Potentialwechsel von 5 V nach 0 V bzw. von 0 V nach 5 V statt. Auf Grund der synchronen Steuerung beider Schalter SA und SB werden auf beiden Leitungen A und B Nachrichtenimpulse zeitlagenmäßig gleichlaufend jedoch amplitudenmäßig gegenläufig übertragen.

Die Potentiale auf den beiden Leitungen A und B werden durch die Schaltzustände der beiden Schalter SA und SB sämtlicher beteiligter Netzknoten bestimmt. Der nichtleitende Schalterzustand der beiden Schalter SA und SB eines oder mehrerer Netzknoten kann durch die leitende Schalterstellung der beiden Schalter SA und SB eines oder mehrerer anderer Netzknoten überspielt werden. Aus diesem Grund wird der nichtleitende Zustand der beiden Schalter SA und SB eines Netzknotens als rezessiv und deren leitender Schalterzustand als dominant bezeichnet.

Der Empfangsteil des jeweiligen Netzknotens umfaßt eine Potentialwechseldetektoreinrichtung in Form eines Komparators CD, mittels welchem die Differenz zwischen dem Potential auf der Leitung A und dem Potential auf der Leitung B gebildet wird. Weist Leitung A ein höheres Potential als Leitung B auf, erscheint am Ausgang des Komparators CD der Logikwert "1", ansonsten der Logikwert "0" . Einem rezessiven Zustand oder Logikwert "1" auf dem Doppelleitungsbus ist somit ein Logikwert "1" am Ausgang des Komparators CD zugeordnet, während bei einem dominanten Zustand oder Logikwert "0" auf dem Doppelleitungsbus am Ausgang des Komparators CD ein Logikwert "0" erscheint. Der Komparator CD dient daher als Dekodierer für die Nachrichten, die in Form der beschriebenen Potentiale über den Doppelleitungsbus übertragen werden.

Jeder Netzknoten weist eine eigene Betriebsspannungsquelle auf, welche aus der dem gesamten Datenübertragungssystem gemeinsamen Versorgungsspannungsquelle, beispielsweise einer Kraftfahrzeugbatterie, als geregelte Spannung gewonnen wird. Der Versorgungsspannungsquelle ist eine Systemmasse, im Fall eines Kraftfahrzeugs in Form von Karosserieblech, zugeordnet. Bei praktischen Ausführungsformen ist das Bezugspotential GND der netzknoteneigenen Betriebsspannungsquelle üblicherweise gleich dem Systemmassepotential, nämlich 0 V. Betrachtet man ein fahrzeugeigenes CAN-Netz, werden die beiden Leitungen A und B des Doppelleitungsbus üblicherweise an Karosserieteilen entlanggeführt. Es kann dabei passieren, daß ein Kurzschluß der Leitung A und/oder der Leitung B nach Systemmasse hin entsteht, beispielsweise infolge von Durchscheuern der Isolierung der betroffenen Leitung.

Nach dem bereits erwähnten Protokoll, wie es beispielsweise für CAN-Netze gilt, werden gesendete Nachrichten in Form von Impulsfolgen oder (Impuls-)Rahmen übertragen, die einen vorgeschriebenen zeitlichen Mindestabstand voneinander haben und innerhalb welcher nicht mehr als eine vorgeschriebene Anzahl von Bits gleichen Logikwertes aufeinanderfolgen dürfen. Außerdem sieht dieses Protokoll vor, daß am Ende eines gesendeten Rahmens sämtliche empfangsfähigen Netzknoten während einer vorbestimmten, für alle Netzknoten gleichen Bestätigungszeitlage einen Bestätigungsimpuls senden. Dies führt zu den bereits erläuterten Problemen, wenn ein Leitungsfehler in der Art vorliegt, daß die Leitung B einen Kurzschluß zur Systemmasse hin aufweist, weil dann während der Bestätigungszeitlage sämtliche netzknoteneigenen Betriebsspannungsquellen VK Strom über die kurzgeschlossene Leitung B zur Systemmasse hin liefern, mit den bereits erläuterten Auswirkungen.

Da sich die vorliegende Erfindung nur auf die Überwindung dieses speziellen Problems richtet, befaßt sich die Erfindung lediglich mit diesem Leitungsfehler, nicht jedoch mit allen anderen Leitungsfehlern, die in einem solchen Datenübertragungsnetz auftreten können.

Liegt ein Kurzschluß der Leitung B nach Systemmasse hin vor, ist jedoch das Leitungssystem hinsichtlich Leitung A in Ordnung, treten auf Leitung A weiterhin Potentialwechsel zwischen 5 V und 0 V auf, während Leitung B während des Andauerns des Kurzschlusses nach Systemmasse hin permanent auf dem Potential 0 V bleibt. Am Ausgang des Komparators CD treten mit den Potentialwechseln auf Leitung A weiterhin Wechsel zwischen den Logikwerten in "1" und "0" auf, so daß die Dekodierung der gesendeten Nachricht weiterhin funktioniert. Da aus dem Ausgangssignal des Komparators CD keine Erkenntnis dahingehend möglich ist, daß ein Leitungsfehler in Form eines Kurzschlusses der Leitung B nach Systemmasse hin vorliegt, sind bei der in Fig. 1 gezeigten Ausführungsform der erfindungsgemäßen Überwachungsschaltung zwei weitere Komparatoren CA und CB vorgesehen. Mit CA werden Potentialwechselaktivitäten auf Leitung A und mit CB werden Potentialwechselaktivitäten auf Leitung B erfaßt. CA und CB vergleichen das Potential der Leitung A bzw. der Leitung B mit je einem zwischen dem Betriebspotential und dem Bezugspotential liegenden Mittenpotential, beispielsweise von 2,5 V. Bei fehlerfreiem Doppelleitungsbus liefern die Ausgänge beider Komparatoren CA und CB das gleiche Ausgangssignalmuster wie der Komparator CD, nämlich einen Logikwert "1" bei rezessivem Zustand oder Logikwert "1" auf dem Doppelleitungsbus und einen Logikwert "0" bei dominantem Zustand oder Logikwert "0" auf dem Doppelleitungsbus. Im Fall eines Kurzschlußes der Leitung B nach Systemmasse hin liefern die Ausgänge der Komparatoren CD und CA weiterhin ein derartiges Signalmuster mit abwechselnden Logikwerten "1" und "0", während der Ausgang des Komparators CB während der Kurzschlußdauer permanent auf dem Logikwert "1" stehen bleibt.

Des weiteren weist die Überwachungsschaltung drei Differenzierglieder DiffA, DiffB und DiffD auf, deren Eingänge mit dem Ausgang des Komparators CB bzw. dem Ausgang des Komparators CA bzw. dem Ausgang des Komparators CD verbunden sind. Mit diesen Differenziergliedern werden die Potentialwechselflanken im Ausgangssignal des je zugehörigen Komparators in Impulse umgewandelt. Auf Grund eines Schaltungsaufbaus, wie er nachfolgend anhand von Fig. 2 näher erläutert wird, wirken die Differenzierglieder sowohl differenzierend als auch gleichrichtend, so daß alle Potentialwechsel oder alle Flanken im Ausgangssignal des je zugehörigen Komparators am Ausgang des jeweiligen Differenziergliedes zu Ausgangsimpulsen gleicher Polarität führen.

Die Ausgänge der Differenzierglieder DiffA und DiffB sind über eine Vorrangschaltung VR mit einem Abwärtszähleingang down bzw. mit einem Aufwärtszähleingang up eines Aufwärts/Abwärts-Zählers Z0 verbunden. Dieser weist einen Zählsignalausgang Z0A auf, der mit einem Zählfreigabeeingang EE eines zweiten Zählers Z2 verbunden ist. Letzterer weist außerdem einen Zähltakteingang Z2T, einen Rücksetzeingang RESET und einen Zählerausgang Z2A auf. Der Rücksetzeingang RESET von Z2 ist mit einem Zählerausgang Z1A eines dritten Zählers Z1 verbunden, der einen Rücksetzeingang reset und einen Zähltakteingang Z1T aufweist. Dessen Rücksetzeingang reset ist an den Ausgang des Differenziergliedes DiffD angeschlossen. Den Zähltakteingängen Z1T und Z2T der Zähler Z1 und Z2 wird ein internes Taktsignal INTclk zugeführt, das vorzugsweise im jeweiligen Netzknoten selbst erzeugt wird.

Der Aufwärts/Abwärts-Zähler bildet eine erste Zeitmeßeinrichtung, der Zähler Z2 bildet eine zweite Zeitmeßeinrichtung und der Zähler Z1 bildet eine dritte Zeitmeßeinrichtung.

Die Vorrangschaltung VR umfaßt ein UND-Glied AND mit einem mit dem Ausgang von DiffA verbundenen nicht-negierenden Eingang, einem mit dem Ausgang von DiffB verbundenen negierenden Eingang und einem mit dem Aufwärtszähleingang up von Z0 verbundenen Ausgang. Somit ist der Abwärtszähleingang down direkt mit dem Ausgang von DiffB verbunden, während der Aufwärtszähleingang up über das UND-Glied AND nur indirekt sowohl mit dem Ausgang von DiffA als auch mit dem Ausgang von DiffB verbunden ist.

Das am Zählerausgang Z2A des Zählers Z2 auftretende Signal dient als Schaltersteuersignal SC, welches die zweiten Schalter SB vorzugsweise aller empfangsfähiger Netzknoten für den Fall zwangsweise in einen nichtleitenden Zustand schaltet, daß Leitung B einen Kurzschluß nach Systemmasse hin aufweist.

Eine das CAN-Protokoll berücksichtigende praktische Ausführungsform ist so ausgelegt, daß der Aufwärts/Abwärts-Zähler Z0 beim Erreichen eines Zählstandes von mehr als drei an seinem Zählerausgang Z0A ein Fehlersignal E abgibt, daß der Zähler Z2 beim Überschreiten eines Zählstandes von 114 ein den zweiten Schalter SB zwangsweise in den nichtleitenden Zustand steuerndes Schaltersteuersignal SC liefert und daß der Zähler Z1 beim Überschreiten eines Zählstandes von 200 an seinem Zählerausgang Z1A ein Rücksetzsignal R abgibt. Bei dieser praktischen Ausführungsform entspricht die Dauer eines Bits der Nachrichtenimpulsfolge der Dauer von 10 Zähltaktimpulsen. Für diesen Fall gibt der dritte Zähler Z1 an seinem Ausgang das Rücksetzsignal R erst ab, wenn seit dem letzten ihm signalisierten Potentialdifferenzwechsel eine Zeitdauer überschritten worden ist, welcher der Zeitdauer von 20 Bits entspricht. Bei diesem Beispiel bewirkt die zeitliche Maskierung durch den zweiten Zähler Z2, daß von dessen Rücksetzung an der ihm vom ersten Zähler Z0 gemeldete Fehler E länger dauern muß als die Zeitdauer von 11 Bits, um das die zweiten Schalter SB zwangsweise in den nichtleitenden Zustand steuernde Schaltersteuersignal SC zu erzeugen.

Die das Rücksetzsignal R bzw. das Schaltersteuersignal SC auslösenden Zählwerte der Zähler Z1 bzw. Z2 sind unter Berücksichtigung des speziellen Protokolls des Datenübemagungsnetzes, in dem die erfindungsgemäße Überwachungsschaltung zur Anwendung kommt, zu wählen.

Es wird nun die Funktionsweise der in Fig. 1 gezeigten Schaltung in der genannten praktischen Ausführungsform betrachtet.

Der Zähler Z1 erreicht einen Zählwert von 200, wenn seit der letzten ihn rücksetzenden Potentialwechselaktivität auf dem Doppelleitungsbus eine Zeitdauer vergangen ist, die 20 Nachrichtenbits entspricht. Nach dem CAN-Protokoll dürfen während eines Nachrichtenrahmens nicht mehr als 11 Bits gleichen Logikwertes aufeinanderfolgen, darf also während eines Rahmens eine Potentialwechselpause nicht größer sein, als es der Zeitdauer von 11 Bits entspricht. Ist seit dem letzten Rücksetzen des Zählers Z1 ein Zählwert von 200 erreicht worden, was einer Zeitdauer von zwanzig Nachrichtenbits entspricht, wird daher davon ausgegangen, daß zum Zeitpunkt des Erreichens des Zählwertes 200 eine Rahmenpause vorliegt. Der Zähler Z2 wird zu diesem Zeitpunkt rückgesetzt und für den Beginn eines neuen Rahmens vorbereitet. Da der Zähler Z1 erst beim Beginn eines neuen Rahmens wieder rückgesetzt wird, hält dessen Ausgangssignal den Zähler Z2 bis zu einem solchen neuen Rahmenbeginn rückgesetzt. Der Zähler Z2 wird daher für einen neuen Zählvorgang erst freigegeben, wenn der Zähler Z1 beim Beginn eines neuen Rahmens rückgesetzt wird. Der Zähler Z2 maskiert daher ein eventuell noch vorhandenes Fehlersignal E am Ausgang des Zählers Z0 über eine Zeitdauer, die mit dem jeweiligen Rahmen beginnt und der Zeitdauer von 114 Taktimpulsen des internen Taktsignals INTclk entspricht oder einer Zeitdauer von 11,4 Nachrichtenbits. Nur wenn das Fehlersignal E auch nach dieser Zeitdauer von 114 Taktimpulsen noch vom Zähler Z0 abgegeben wird, wird davon ausgegangen, daß der Fehler auch während dieses neuen Rahmens noch vorhanden ist und werden die zweiten Schalter SB der Netzknoten wieder zwangsweise in den nichtleitenden Zustand geschaltet.

Liegt beim Beginn eines neuen Rahmens der Fehler nicht mehr vor, hat der Zähler Z0 für die Dauer von 114 Taktimpulsen oder 11,4 Nachrichtenbits Zeit, unter den Zählwert von 4 herabzuzählen, um an seinem Ausgang kein Fehlersignal E mehr abzugeben und somit kein erneutes zwangsweises nichtleitend Schalten der zweiten Schalter SB der Netzknoten auszulösen. Ein entsprechend rasches Herabzählen wird dem Zähler Z0 durch die Vorrangschaltung VR ermöglicht.

Es wird nun zunächst einmal davon ausgegangen, daß ein Kurzschluß zwischen Leitung B und Systemmasse nicht vorliegt, und daß gerade eine Rahmenpause vorliegt, somit auf keiner der beiden Leitungen A und B Potentialwechselaktivitäten vorhanden sind, und zwar schon so lange, daß der Zähler Z2 bereits rückgesetzt ist.

Beim Beginn eines nachfolgenden Rahmens, d.h. einer nachfolgenden Nachrichtenimpulsfolge, führen die Potentialwechselaktivitäten auf beiden Leitungen A und B dazu, daß der Aufwärts/Abwärts-Zähler Z0 wechselweise aufwärts und abwärts zählt, somit einen Zählstand von größer als 3 nicht erreicht. Daher wird an seinem Ausgang Z0A auch kein Fehlersignal E abgegeben. Dies wiederum führt dazu, daß das Zählen des Zählers Z2 nicht freigegeben wird und dieser den Zählstand nicht erreichen kann, bei welchem er das die zweiten Schalter SB in den nichtleitenden Zustand zwingende Schaltersteuersignal SC abgibt.

Als nächstes wird angenommen, daß während eines laufenden Rahmens ein Kurzschluß zwischen Leitung B und Systemmasse auftritt. Da von diesem Zeitpunkt ab nur noch die Leitung A Potentialwechselaktivitäten aufweist, jedoch nicht mehr die Leitung B, liefern nur noch die Ausgänge der Komparatoren CA und CD Potentialwechselsignale, jedoch nicht mehr der Ausgang des Komparators CB. Als Folge davon führt der Zähler Z0 nur noch Aufwärts-Zählvorgänge durch. Sobald er den Zählwert von 3 überschreitet, gibt er an seinem Ausgang Z0A das Fehlersignal E ab, welches den Zähler Z2 zum Zählen der Taktimpulse INTclk freigibt. Dauert das Fehlersignal länger, als es der Zeitdauer von 114 Taktimpulsen entspricht, wird am Ausgang von Z2 das Schaltersteuersignal SC an die zweiten Schalter SB vorzugsweise aller empfangsfähiger Netzknoten geliefert, so daß alle diese Schalter zwangsweise in den nichtleitenden Zustand gebracht werden. Während der nachfolgenden Bestätigungsimpulszeitlage am Ende des betrachteten Rahmens können die zweiten Schalter SB dieser Netzknoten daher nicht in den leitenden Zustand geschaltet werden, so daß die Potentialquellen VK aller dieser Netzknoten daher nicht in einen Kurzschluß mit Systemmasse gebracht werden können. Der hohe Stromimpuls, der durch ein leitend Schalten aller dieser zweiten Schalter SB während der Bestätigungszeitlage auftreten würde, wird somit verhindert.

Während des laufenden Rahmens wird der Zähler Z1 bei jedem vom Komparator CD signalisierten Potentialdifferenzwechsel rückgesetzt, so daß er kein Rücksetzsignal R an den Zähler Z2 liefern kann. Das Schaltersteuersignal am Ausgang von Z2 bleibt somit bestehen.

Während der nächsten Rahmenpause bleiben die den Zähler Z1 rücksetzenden Signale vom Ausgang des Komparators CD aus und Z1 kann den Zählwert von 200 überschreiten und damit den Zähler Z2 in einen Anfangszählstand von z.B. 0 rücksetzen. Das Schaltersteuersignal SC am Ausgang von Z2 hört damit auf und die zwangsweise Steuerung der zweiten Schalters SB der Netzknoten in den nichtleitenden Zustand wird wieder aufgehoben.

Es wird nun angenommen, daß zu Beginn eines nachfolgenden weiteren Rahmens der Kurzschluß zwischen Leitung B und Systemmasse noch vorhanden ist. In diesem Fall beginnt der Zähler Z0 beim Beginn dieses Rahmens wieder mit einer Aufwärtszählung, ohne vom Ausgang des Komparators CB Abwärtszählsignale zu erhalten, so daß Z0 weiter über den Zählstand von drei hinauszählt und weiterhin das Fehlersignal E liefert. Damit ist Z2 wieder zum Zählen von Zähltaktimpulsen freigegeben und liefert nach dem Überschreiten eines Zählstandes von 114 an die zweiten Schalter SB wieder das sie zwangsweise nichtleitend steuernde Schaltersteuersignal SC.

Es wird nun angenommen, daß bei einem neuen Rahmenbeginn der Kurzschluß zwischen Leitung B und Systemmasse nicht mehr vorliegt. Während der vorausgehenden Rahmenpause hat der Zähler Z1 den Zählwert 200 überschritten und den Zähler Z2 rückgesetzt. Der Zähler Z0 befindet sich noch auf einem Zählstand, in welchem er das Fehlersignal E abgibt. Da nun wieder beide Leitungen A und B Potentialwechselaktivitäten aufweisen, liefern auch wieder die Ausgänge beider Komparatoren CA und CB Potentialwechselimpulse, so daß wieder abwechselnd Aufwärts- und Abwärts-Zählvorgänge stattfinden können. Da die Vorrangschaltung VR bewirkt, daß dann, wenn sowohl DiffA als auch DiffB Zählimpulse liefert, das Abwärtszählen Vorrang vor dem Aufwärtszählen hat, erfolgt ein rasches Herabzählen des Zählers Z0 und somit eine rasche Beendigung des Fehlersignals E am Ausgang von Z0. Der während der letzten Rahmenpause zurückgesetzte Zähler Z2 kann daher den Zählstand von 114 nicht mehr überschreiten und liefert während dieses neuen Rahmens nicht mehr das Schaltersteuersignal SC an seinem Ausgang Z2A.

Ein Ausführungsbeispiel eines Differenziergliedes, wie es für DiffA, DiffB und/oder DiffD verwendet werden kann, ist in Fig. 2 gezeigt. Ein solches Differenzierglied ist mit einem D-Flipflop FF und mit einem XOR-Glied aufgebaut. Ein D-Eingang des Flipflops FF ist mit dem Ausgang des zugehörigen der Komparatoren CA, CB und CD verbunden. Ein Takteingang von FF wird mit einem Taktsignal beaufschlagt, vorzugsweise mit dem netzknoteninternen Taktsignal INTclk. Ein erster Eingang des XOR-Gliedes ist mit einem Q-Ausgang des Flipflop FF und ein zweiter Eingang des XOR-Gliedes ist mit dem D-Eingang von FF verbunden. Ein Ausgang des XOR-Gliedes bildet den Ausgang des Differenzgliedes.

In Fig. 2 ist als Beispiel und stellvertretend für alle drei Differenzierglieder das Differenzierglied DiffA betrachtet, dessen D-Eingang mit dem Ausgang des Komparators CA und dessen Ausgang mit dem einen Eingang der Vorrangschaltung VR verbunden sind. Der von CA kommende jeweilige Flankenwechsel wird vom D-Flipflop FF erst mit dem jeweils folgenden Taktimpuls INTclk übernommen und am Q-Ausgang von FF dargestellt. Da ein XOR-Glied einen Logikwert "1" oder ein Potential H nur abgibt, wenn seinen beiden Eingängen unterschiedliche Logikwerte zugeführt werden, entstehen am Ausgang von DiffA Impulse nur während der Verzögerungszeitdauer zwischen dem Erscheinen des jeweiligen Flankenwechsels am D-Eingang bzw. am Q-Ausgang von FF. Mit einem Differenzierglied der in Fig. 2 gezeigten Art wird somit sowohl ein Differenzieren der aufeinanderfolgenden Potentialwechsel oder Logikwertübergänge als auch eine Gleichrichtung der differenzierten Impulse erreicht. Als Folge davon löst jeder Potentialwechsel bzw. Logikwertübergang am Ausgang des zugehörigen Komparators einen Zählvorgang des Zähler Z0 aus.

## Patentansprüche

1. Überwachungsschaltung für ein Datenübertragungsnetz mit einer Mehrzahl von sende- und empfangsfähigen Netzknoten und mit einem die Netzknoten verbindenden, der redundanten Doppelübertragung von digitalen Nachrichten dienenden Doppelleitungsbus mit einer ersten Leitung (A) und einer zweiten Leitung (B), über welche in Form von zeitlich voneinander beabstandeten Impulsfolgen übertragene Nachrichtenimpulse zeitlagenmäßig gleichlaufend übertragen werden, wobei:
a) mindestens ein Teil der Netzknoten den Empfang der jeweiligen Impulsfolge durch das Senden eines Bestätigungsimpulses während einer vorbestimmten, für alle Netzknoten gleichen Zeitlage bestätigt;
b) in mindestens einem Teil der Netzknoten die erste Leitung (A) über einen ersten Widerstand (RA) mit einer netzknoteneigenen Betriebspotentialquelle (VK) und über einen ersten steuerbaren Schalter (SA) mit einer Bezugspotentialquelle (GND) und die zweite Leitung (B) über einen zweiten Widerstand (RB) mit der Bezugspotentialquelle (GND) und über einen steuerbaren zweiten Schalter (SB) mit der Betriebspotentialquelle (VK) verbunden ist;
c) die beiden Schalter (SA, SB) zum Senden eines Nachrichtenimpulses eines ersten Logikwertes gleichzeitig nichtleitend und zum Senden eines Nachrichtenimpulses eines zweiten Logikwertes gleichzeitig leitend gesteuert werden;
d) eine Potentialwechseldetektoreinrichtung (CA, CB) vorgesehen ist, mittels welcher die beiden Leitungen (A, B) je auf das Vorliegen von Potentialwechselaktivitäten überwachbar sind und mittels welcher ein Zustand detektierbar ist, in welchem während einer Impulsfolge Potentialwechselaktivitäten nur auf der ersten Leitung (A), nicht jedoch auf der zweiten Leitung (B) auftreten; **dadurch gekennzeichnet, dass** eine erste Zeitmeßeinrichtung (Z0) vorgesehen ist, mittels welcher eine zeitliche Messung der Dauer eines solchen Zustandes durchführbar ist und mittels welcher beim Überschreiten einer vorbestimmten Zeitdauer eines solchen Zustands ein Fehlersignal (E) erzeugbar ist, in Abhängigkeit von welchem die zweiten Schalter (SB) mindestens eines Teils der Netzknoten zwangsweise nichtleitend steuerbar sind.

2. Überwachungsschaltung nach Anspruch 1, bei welcher die erste Zeitmeßeinrichtung (Z0) einen Aufwärts/Abwärts-Zähler aufweist, der durch von der Potentialwechseldetektoreinrichtung (CA, CB) signalisierte Potentialwechsel auf der ersten Leitung (A) zur Aufwärtszählung und durch von der Potentialwechseldetektoreinrichtung (CA, CB) signalisierte Potentialwechsel auf der zweiten Leitung (B) zur Abwärtszählung veranlaßt wird und der beim Erreichen eines vorbestimmten Zählwertes ein als Fehlersignal (E) dienendes Zählerausgangssignal abgibt.

3. Überwachungsschaltung nach Anspruch 2, bei welcher die Potentialwechseldetektoreinrichtung (CA, CB) eine erste Komparatoreinrichtung (CB) und eine zweite Komparatoreinrichtung (CB) aufweist, mittels welchen das Potential der zweiten Leitung (B) bzw. der ersten Leitung (A) mit einem ersten bzw. einem zweiten Mittenpotential (2,5 V), die je zwischen dem Betriebspotential (5 V) und dem Bezugspotential (0 V) liegen, vergleichbar ist, und bei welcher der Aufwärts/Abwärts-Zähler (Z0) einen mit einem Komparatorausgang des zweiten Komparators (CA) gekoppelten Aufwärtszähleingang (up) und einen mit einem Komparatorausgang des ersten Komparators (CB) gekoppelten Abwärtszähleingang (down) aufweist.

4. Überwachungsschaltung nach Anspruch 3, bei welcher zwischen der ersten Komparatoreinrichtung (CB) und der Aufwärts/Abwärtszähleinrichtung (Z0) und zwischen der zweiten Komparatoreinrichtung (CA) und der Aufwärts/Abwärtszähleinrichtung (Z0) je ein Differenzierglied (DiffA, DiffB) angeordnet ist.

5. Überwachungsschaltung nach einem der Ansprüche 1 bis 4, mit einer rücksetzbaren zweiten Zeitmeßeinrichtung (Z2),
mittels welcher eine zeitliche Messung der Fehlersignaldauer durchführbar ist,
die beim Überschreiten einer vorbestimmten Fehlersignaldauer ein Schaltersteuersignal (SC) abgibt, mittels welchem die zweiten Schalter (SB) zwangsweise in den nichtleitenden Zustand steuerbar sind,
und die durch ein Rücksetzsignal (R) in einen Anfangszustand rücksetzbar ist.

6. Überwachungsschaltung nach Anspruch 5, mit einer rückstellbaren dritten Zeitmeßeinrichtung (Z1), der Änderungen der Potentialdifferenz zwischen den beiden Leitungen (A, B) signalisiert werden, die bei jeder signalisierten Potentialdiffernzänderung in einen Anfangszustand rücksetzbar ist und von der nach Ablauf einer vorbestimmten Zeitdauer seit dem letzten Rücksetzvorgang ein Rücksetzsignal (R) erzeugbar ist, mittels welchem die zweite Zeitmeßeinrichtung (Z2) in einen Anfangszustand rücksetzbar ist.

7. Überwachungsschaltung nach Anspruch 6, mit einer die Potentiale der beiden Leitungen (A, B) vergleichenden dritten Komparatoreinrichtung (CD) mit einem Komparatorausgang, der mit einem Rücksetzeingang (reset) der dritten Zeitmeßeinrichtung (Z1) gekoppelt ist.

8. Überwachungsschaltung nach Anspruch 7, bei welcher zwischen der dritten Komparatoreinrichtung (CD) und der dritten Zeitmeßeinrichtung (Z1) ein weiteres Differenzierglied (DiffD) angeordnet ist.

9. Überwachungsschaltung nach einem der Ansprüche 4 bis 8, bei welcher mindestens eines der Differnzierglieder (DiffA, DiffB, DiffD) sowohl differenzierend als auch gleichrichtend wirkt.

10. Überwachungsschaltung nach Anspruch 9, bei welcher das jeweilige Differenzierglied (DiffA, DiffB, DiffD) aufweist:
ein D-Flipflop (FF) mit einem mit dem Ausgang der zugehörigen Komparatoreinrichtung (CA, CB, CD) gekoppelten D-Eingang, einem mit einer Taktimpulsquelle (INTclk) verbundenen Takteingang und einem Q-Ausgang (Q);
und ein XOR-Glied (XOR) mit einem mit dem D-Eingang verbundenen ersten Eingang, einem mit dem Q-Ausgang verbundenen zweiten Eingang und einem den Differenziergliedausgang bildenden Ausgang.

11. Überwachungsschaltung nach einem der Ansprüche 3 bis 10, bei welcher zwischen die beiden Leitungen (A, B) und den Aufwärts/Abwärts-Zähler (Z0) eine Vorrangschaltung (VR) geschaltet ist, mittels welcher dann, wenn auf beiden Leitungen (A, B) Potentialwechsel auftreten, dem Abwärtszählen Vorrang vor dem Aufwärtszählen eingeräumt wird.

12. Überwachungsschaltung nach Anspruch 11, bei welcher die Vorrangschaltung (VR) ein UND-Glied (UND) aufweist, von dem ein invertierender erster Eingang mit einem Ausgang des ersten Differenziergliedes (DiffB), ein nicht-invertierender zweiter Eingang mit einem Ausgang des zweiten Differenziergliedes (DiffA) und ein Ausgang mit dem Aufwärtszähleingang (up) der Aufwärts/Abwärtszähleinrichtung (Z0) verbunden ist.

13. Überwachungsschaltung nach einem der Ansprüche 5 bis 12, bei welcher die zweite Zeitmeßeinrichtung (Z2) mit einem zweiten Zähler aufgebaut ist, der einen mit einer Zähltaktquelle (IntCLK) verbundenen Takteingang und einen der Beaufschlagung mit dem Fehlersignal (E) dienenden Zählfreigabeeingang aufweist.

14. Überwachungsschaltung nach Anspruch 13, bei welchem der zweite Zähler (Z2) einen mit einem Ausgang (Z1A) der dritten Zeitmeßeinrichtung (Z1) gekoppelten Rücksetzeingang (RESET) aufweist.

15. Überwachungsschaltung nach einem der Ansprüche 5 bis 14, bei welcher die dritte Zeitmeßeinrichtung (Z1) mit einem dritten Zähler aufgebaut ist, der einen mit einer Zähltaktquelle (IntCLK) verbundenen Takteingang und einen mit einem Ausgang der dritten Komparatoreinrichtung (CD) gekoppelten Rücksetzeingang (RESET) aufweist.

## Claims

1. A monitoring circuit for a data transmission network comprising a plurality of transmissive and receptive network nodes and a double-line bus connecting the network nodes and serving for redundant double transmission of digital communications and having a first line (A) and a second line (B) via which com munication pulses transferred in the form of timespaced pulse sequences are transferred in synchro nous manner in terms of time slot, wherein:
a)at least part of the network nodes confirms the reception of the respective pulse sequence by sending a confirmation pulse during a predeter mined time slot that is equal for all network nodes;
b)in at least part of the network nodes the first line (A) is connected via a first resistor (RA) to a network-node-inherent operating potential source (VK) and via a first controllable switch (SA) to a reference potential source (GND), and the second line (B) is connected via a second resistor (RB) to the reference potential source (GND) and via a controllable second switch (SB) to the operating potential source (VK);
c)the two switches (SA, SB) are simultaneously controlled to the non-conducting state for transmitting a communication pulse having a first logic value and are simultaneously controlled to the conducting state for transmitting a communication pulse having a second logic value;
d) a potential change detector means (CA, CB) is provided by means of which the two lines (A, B) can each be monitored for the presence of poten tial change activities and by means of which a condition can be detected in which, during a pulse sequence, potential change activities occur only on the first line (A), but not on the second line (B);
**characterized in that** there is provided a first time measuring means (Z0) by means of which a time measurement of the duration of such a condition can be carried out and by means of which, when a predetermined duration of such a condition is exceeded, an error signal (E) can be generated, depending on which the second switches (SB) of at least part of the network nodes can be controlled cogently to the non-conducting state.

2. The monitoring circuit of claim 1,
wherein the first time measuring means (Z0) comprises an up/down counter which is caused to perform up-counting by potential changes on the first line (A) signalled by the potential change detector means (CA, CB), and to perform down-counting by potential changes on the second line (B) signalled by the po tential change detector means (CA, CB) and which issues a counter output signal serving as error signal (E) when a predetermined count is reached.

3. The monitoring circuit of claim 2, wherein the potential change detector means (CA, CB) comprises a first comparator means (CB) and a second comparator means (CB) by means of which the poten tial of the second line (B) and of the first line (A), respectively, can be compared with a first and a second mean potential (2.5 V) respectively, which are each lying between the operating potential (5 V) and the reference potential (0 V), and wherein the up/down counter (Z0) has an up-counting input (up) coupled with a comparator output of the second com parator (CA) and a down-counting input (down) coupled with a comparator output of the first com parator (CB).

4. The monitoring circuit of claim 3, wherein one differentiating member (DiffA, DiffB) each is arranged between the first comparator means (CB) and the up/down counting means (Z0) as well as between the second comparator means (CA) and the up/down counting means (Z0).

5. The monitoring circuit of any of claims 1 to 4, comprising a resettable second time measuring means (Z2) by means of which a time measurement of the error signal duration can be carried out, which, when a predetermined error signal duration is ex ceeded, issues a switch control signal (SC) by means of which the second switches (SB) cogently can be controlled to the non-conducting state, and which can be reset to an initial state by a resetting signal (R).

6. The monitoring circuit of claim 5,
comprising a resettable third time measuring means (Z1) to which changes in potential difference between the two lines (A, B) are signalled, and which at each signalled potential difference change can be reset to an initial state and, upon ex piration of a predetermined duration since the last resetting operation, can produce a resetting signal by means of which the second time measuring means (Z2) can be reset to an initial state.

7. The monitoring circuit of claim 6,
comprising a third comparator means (CD) comparing the potentials of the two lines (A, B) and having a comparator output coupled with a resetting input (reset) of the third time measuring means (Z1).

8. The monitoring circuit of claim 7,
wherein an additional differentiating member (DiffD) is disposed between the third comparator means (CD) and the third time measuring means (Z1).

9. The monitoring circuit of any of claims 4 to 8,
wherein at least one of the differentiating members (DiffA, DiffB, DiffD) has both a differentiating as well as a rectifying effect.

10. The monitoring circuit of claim 9,
wherein the respective differentiating member (DiffA, DiffB, DiffD) comprises:
a D flipflop (FF) having a D input coupled with the output of the associated comparator means (CA, CB, CD), a clock input connected to a clock pulse source (INTclk), and a Q output (Q);
and a XOR element (XOR) having a first input connected to the D input, a second input connected to the Q output, and an output constituting a differen tiating member output.

11. The monitoring circuit of any of claims 3 to 10,
wherein between the two lines (A, B) and the up/down counter (Z0), there is connected a priority circuit (VR) by means of which, when potential changes occur on both lines (A, B), down-counting is given priori ty over up-counting.

12. The monitoring circuit of claim 11,
wherein the priority circuit (VR) comprises an AND element (AND), of which an inverting first input is connected to an output of the first differentiating member (DiffB), a non-inverting second input is con nected to an output of the second differentiating member (DiffA) and an output is connected to the upcounting input (up) of the up/down-counting means (Z0).

13. The monitoring circuit of any of claims 5 to 12,
wherein the second time measuring means (Z2) is com posed with a second counter having a clock input connected to a counting clock source (IntCLK), and a counting release input serving to have the error signal (R) applied thereto.

14. The monitoring circuit of claim 13,
wherein the second counter (Z2) has a resetting in put (RESET) coupled with an output (Z1A) of the third time measuring means (Z1).

15. The monitoring circuit of any of claims 5 to 14,
wherein the third time measuring means (Z1) is com posed with a third counter having a clock input con nected to a counting clock source (IntCLK), and a resetting input (RESET) coupled with an output of the third comparator means (CD).

## Revendications

1. Circuit de surveillance pour un réseau de transmission de données, comportant une pluralité de noeuds pouvant recevoir et émettre et un bus à deux conducteurs reliant les noeuds et servant à la double transmission redondante d'informations numériques, avec une première ligne (A) par laquelle des impulsions d'information sont transmises parallèlement selon leur position dans le temps sous forme de séries d'impulsions transmises, temporellement espacées entre elles, dans lequel :
a) au moins une partie des noeuds accuse réception de la série d'impulsions concernée par l'envoi d'une impulsion de confirmation pendant une périodes de temps prédéterminée identique pour tous les noeuds;
b) dans au moins une partie des noeuds, la première ligne (A) est reliée; par l'intermédiaire d'une première résistance, à une source de propre au noeud et; par un premier commutateur commandable (SA), à une source de potentiel de référence (GND) et la deuxième ligne (B) est reliée, par l'intermédiaire d'une seconde résistance (RB), avec la source de potentiel de référence (GND) et; par un second commutateur commandable (SB), à la source de potentiel de fonctionnement (VK) ;
c) les deux commutateurs (SA, AB) sont commandés pour être en même temps non passants afin d'émettre une impulsion d'information d'une première valeur logique, et en même temps passants pour émettre une impulsion d'information d'une seconde valeur logique ;
d) il est prévu un dispositif de détection de changement de potentiel (CA, CB) au moyen duquel les deux lignes peuvent être chacune surveillée quant à la présence d'activités de changement de potentiel et au moyen duquel son état est détecté, dans lequel, pendant une suite d'impulsions des activités de changement de potentiel n'apparaissent que sur la première ligne (A) mais pas sur la seconde ligne (B) ;
**caractérisé en ce que**
il est prévu un premier dispositif de chronométrage (20) au moyen duquel une mesure de la durée d'un tel état peut être effectuée et au moyen duquel un signal d'erreur (E) est généré lorsqu'une durée prédéterminée d'un tel état est dépassée, en fonction duquel les seconds commutateurs (SB) d'au moins une partie des noeuds sont forcés à être non passants.

2. Circuit de surveillance selon la revendication 1, dans lequel le premier dispositif de chronométrage (20) présente un compteur/décompteur, qui est actionné pour compter, par un changement de potentiel sur la première ligne (A) signalé par le dispositif de détection de changement de potentiel (CA, CB), et pour décompter, par un changement de potentiel sur la seconde ligne (B) signalé par le dispositif de détection de changement de potentiel (CA, CB), et qui délivre un signal d'erreur (E) servent de signal de sortie de compteur lorsque une valeur de comptage prédéterminée est atteinte.

3. Circuit de surveillance selon la revendication 2, dans lequel le dispositif de détection de changement de potentiel (CA, CB) présente un premier agencement de comparaison (CB) et un second agencement de comparaison (CA) au moyen desquels le potentiel de la seconde ligne (B) ou de la première ligne (A) peut être comparé à un premier ou un second potentiel moyen (2,5 V), qui se situent chacun entre le potentiel de fonctionnement (5 V) et le potentiel de référence (0 V), et dans lequel le compteur/décompteur (Z0) présente une entrée de comptage (up) couplée à une sortie de comparaison du second comparateur (CA) et une entrée de décomptage (down) couplée à une sortie de comparaison du premier comparateur (CB).

4. Circuit de surveillance selon la revendication 3, dans lequel un élément différentiel (DiffA, DiffB) est disposé chaque fois entre le premier agencement de comparaison (CB) et le compteur/décompteur (Z0) et entre le second agencement de comparaison (CA) et le compteur/décompteur (Z0).

5. Circuit de surveillance selon l'une des revendications 1 à 4, comportant un second dispositif chronométrique (Z2),
au moyen duquel peut être effectuée une mesure temporelle de la durée du signal d'erreur,
qui, pour un dépassement d'une certaine durée prédéterminée du signal d'erreur, émet un signal de commande de commutateur (SC) au moyen duquel les seconds commutateurs (SB) peuvent être commandés pour être forcés à l'état non passant
et qui peut être remis à l'état initial par un signal de réinitialisation ®.

6. Circuit de surveillance selon la revendication 5, comportant un troisième dispositif chronométrique réinitialisable (Z1) auquel sont signalés les changements de différence de potentiel entre les deux lignes (A, B), qui pour chaque signalement de changement de différence de potentiel peut être ramené à son état initial et qui émet, après écoulement d'un certain délai depuis la dernière réinitialisation, un signal de réinitialisation (R) au moyen duquel le second dispositif chronométrique est ramené à son état initial.

7. Circuit de surveillance selon la revendication 6, comportant un troisième dispositif de comparaison (CD) mesurant le potentiel des deux lignes (A, B), avec une sortie de comparaison reliée à une entrée de réinitialisation (RESET) du troisième dispositif de comparaison (CD).

8. Circuit de surveillance selon la revendication 7, dans lequel entre le troisième dispositif de comparaison (CD) et le troisième dispositif chronométrique réinitialisable (Z1) est disposé un autre élément différentiel (DiffD).

9. Circuit de surveillance selon l'une des revendications 4 à 8, dans lequel qu moins l'un des éléments différentiels (DiffA, DiffB, DiffD) travaille aussi bien comme différentiel que comme redresseur.

10. Circuit de surveillance selon la revendication 9, dans lequel chaque élément différentiel (DiffA, DiffB, DiffD) présente :
une bascule bistable-D (FF) avec une entrée D couplée à la sortie du dispositif de comparaison (CA, CB, CD) correspondant, une entrée de rythme couplée à une source d'impulsions de rythme (INTclk) et une sortie Q (Q).
et un élément XOR (XOR) avec une première entrée couplée à l'entrée D, une deuxième entrée reliée à la sortie Q et une sortie formant la sortie de l'élément différentiel.

11. Circuit de surveillance selon l'une des revendications 3 à 10, dans lequel, entre les deux lignes (A, B) et le compteur/décompteur (Z0) est monté un circuit de prépondérance (VR) au moyen duquel, lorsque apparaît sur les deux lignes (A, B) un changement de potentiel, est organisée la prépondérance du décomptage sur le comptage..

12. Circuit de surveillance selon la revendication 11, dans lequel le circuit de prépondérance (VR) présente un élément ET (AND) par lequel une première entrée inverseuse est reliée à une première sortie du premier élément différentiel (DiffB), une deuxième entrée non inverseuse à la sortie du deuxième élément différentiel (DiffA) et une sortie à l'entrée de comptage (up) du compteur/ décompteur (Z0)

13. Circuit de surveillance selon l'une des revendications 5 à 12, dans lequel le second dispositif de mesure chronométrique (Z2) est réalisé avec un second compteur qui présente une entrée de rythme reliée à la source de rythme de comptage (INTclk) et une entrée de déclenchement du comptage servant pour l'attaque du signal d'erreur (E).

14. Circuit de surveillance selon la revendication 13, dans laquelle second compteur (Z2) présente une sortie de réinitialisation (RESET) reliée à une sortie (Z1A) du troisième dispositif de mesure chronométrique (Z1).

15. Circuit de surveillance selon l'une des revendications 5 à 14, dans lequel le troisième dispositif de mesure chronométrique (Z1) est réalisé avec un troisième compteur, qui présente une entrée de rythme reliée à une source de rythme de comptage (INTclk) et une entrée de réinitialisation (RESET) reliée à une sortie du troisième dispositif de comparaison (CD).
